# EUROPÄISCHE PATENTANMELDUNG

(11) **EP 0 780 097 A2**
(43) Veröffentlichungstag der Anmeldung: **25.06.1997**
(21) Anmeldenummer: 96890199.1
(22) Anmeldetag: 20.12.1996
(51) Int. Cl.: A61C 1/00, A61B 17/36

(54) **Laservorrichtungen und -Verfahren für die Anwendung in der Medizin, speziell der Dentalmedizin**

(30) Priorität: 20.12.1995 US 578465
(71) Anmelder: DENTALWERK BÜRMOOS GESELLSCHAFT M.B.H., A-5111 Bürmoos (AT)
(72) Erfinder: Schneider, Richard T., Alachua, Florida 32615 (US)
(74) Vertreter: Patentanwälte BARGER, PISO & PARTNER

(57) **Zusammenfassung**

Die Erfindung betrifft eine dentale Laservorrichtung, um Laserstrahlung auf eine Oberfläche zu richten, umfassend ein Gehäuse (20), einer Laserquelle um innerhalb des Gehäuses Laserstrahlung zu bilden, einen Abstrahlkopf (12); ein Befestigungssystem (70, 72), das am Abstrahlkopf (12) angeordnet ist, um ihn während der Behandlung abnehmbar zu fixieren und ein Sicherheitsabschaltsystem, das zumindest ein Kopfkissen aufweist, in dem sich ein Sensor befindet, der elektrisch mit der Laserquelle verbunden ist und diese automatisch abschaltet, wenn ungenügende Kraft auf das Kopfkissen wirkt.

Ausgestaltungen und Varianten betreffen ein Kühlsystem und eine Fokussiervorrichtung sowie ein Verfahren zum Betreiben der Vorrichtung.

## Beschreibung

Die vorliegende Erfindung betrifft im allgemeinen Lasersysteme zur Verwendung in der Medizin und im speziellen Laservorrichtungen und Verfahren, die zur Anwendung in der Dentalmedizin geeignet sind, wie bei der Behandlung von Abszessen, von kariösen Bereichen und auch beim Schneiden oder Entfernen von hartem oder weichem Gewebe.

Laserstrahlung wird derzeit in der Medizin und in der Dentalmedizin für die Durchführung zahlreicher Verfahren verwendet, inklusive Verfahren, die das Schneiden oder Verdampfen weichen Gewebes einschließlich Zahnfleisch, Nervengewebe und Zahnpulpa umfassen. Es wurde auch gezeigt, daß Laserstrahlung mit passender Wellenlänge und Energiedichte hartes Gewebe einschließlich Knochen, Zahnschmelz, Zahnbein und Zahnfüllungen ebenso gut schneiden kann, wie entmineralisierte harte Gewebe, wie beispielsweise kariöses Zahngewebe. Laserstrahlung kann auch zum Schneiden von Zahnstein, weichem oder hartem Zahnbelag und den meisten Materialien, die sich an Zahnoberflächen ausbilden, ebenso wie für ähnliche Materialien, die sich in Körperkanälen ausbilden, einschließlich Blutgefäßen und harnleitenden Gefäßen verwendet werden.

Die Wirksamkeit von Laserstrahlung auf ein spezielles Gewebe hängt in großem Ausmaß von der Wellenlänge und der Intensität der Strahlung und der Form, in der die Strahlung dem Gewebe zugeführt wird, ab. Typischerweise wird die Strahlung auf eine von zwei Arten zugeführt, nämlich entweder als kontinuierliche Welle oder als pulsierende Welle. Die Art des für ein spezielles Anwendungsgebiet zu verwendenden Lasers wird durch die Intensität und Wellenlänge des Laserlichtes, das für diese Prozedur die größte Effektivität aufweist, bestimmt. Wenn pulsierende Strahlung für das Verfahren bevorzugt ist, müssen auch die optimalen Werte für die Pulsdauer und die Wiederholungsfrequenz bestimmt werden. Die Energie, die durch jeden Puls zugeführt wird, ist das Produkt der Laserstärke und der Pulsdauer. Die Energiedichte, mit der jeder Puls auf das zu behandelnde Gewebe aufgebracht wird, ist die gesamte übertragene Energie dividiert durch die Größe der Bestrahlungsfläche am Gewebe. Die Energiedichte ist ein wichtiger Parameter bei der Bestimmung der Wirkung der Laserstrahlung.

Bei Verfahren der oben beschriebenen Art ist die Möglichkeit, die Strahlung dem gewünschten Ort zuzuführen, von substantieller Bedeutung. Bei vielen Anwendungen ist es wünschenswert, die Strahlung mittels Handstücken, die durch einen Arzt oder Zahnarzt leicht gehandhabt werden können, zuzuführen. Da jedoch die Laser selbst, insbesondere die, die bei solchen medizinischen Behandlungen notwendigen Energieneveaus erreichen, relativ voluminöse Vorrichtungen sind, werden Handstücke in Verbindung mit optischen Leitern verwendet, die die Laserstrahlung vom Laser selbst zum Handstück leiten. Eines der Probleme die im Zusammenhang mit der Verwendung optischer Fasern für die Übertragung von Laserstrahlen auftreten, ist, daß bei bestimmten Wellenlängen der Laserstrahlen das für das Faserkabel zu verwendende Material spröde sein kann und dadurch zum Brechen neigt. Zusätzlich wird die Kohärenz der Laserstrahlung durch den Durchgang durch eine Faser verschlechtert.

Obwohl die Strahlung, die von vielen Lasern erzeugt wird, derzeit nicht zufriedenstellend durch optische Fasern übertragen werden kann, ist es bekannt, daß Strahlung mit einer Wellenlänge von etwa 0,5 Mikrometer bis zu etwa 1 Mikrometer über konventionelle optische Fasern übertragen werden kann. Bei längeren Wellenlängen gibt es Absorptionsbanden, insbesondere bei etwa 3 Mikrometer.

Andererseits haben in der Hand gehaltene Laser, die klein genug sind, um im Dentalbereich eingesetzt zu werden und die keine optischen Fasern verwenden, andere Probleme. Ohne optischer Faser muß der Chirurg den Brennpunkt der Laserstrahlung auf die zu behandelnde Stelle richten. Es wäre für einen Zahnchirurgen sehr schwierig, die präzise Lage und den präzisen Abstand mit ruhiger Hand einzuhalten. Es ist aber beides notwendig, um den Brennpunkt der Laserstrahlung im Zuge eines Eingriffes optimal zu führen. Die Schwierigkeit kann noch größer werden, da die Energie, die bei zahnärztlichen Lasern abgestrahlt wird, üblicherweise im Infrarot-Bereich liegt. Es wäre für einen Chirurgen extrem schwierig, den Brennpunkt von Laserstrahlen korrekt auf den zu behandelnden Punkt zu führen, wenn die Strahlen unsichtbar sind. Das Problem mit Infrarot-Laserstrahlung wurde in der Vergangenheit dadurch gelöst, daß die Handstücke so ausgerüstet worden sind, daß sichtbares Licht entlang der gleichen Achse und mit dem gleichen Brennpunkt, wie die Laserstrahlung, ausgesandt wird. Das sichtbare Licht erlaubt es dem Zahnarzt, das Dentalinstrument richtig zu richten, so daß der Brennpunkt der Laserstrahlung passend auf das Ziel gerichtet ist. Es löst aber natürlich das sichtbare Licht nicht die Probleme, die mit einer unruhigen Hand verbunden sind. Es ist somit Bedarf für ein dentales Lasersystem gegeben, bei dem keine optischen Fasern verwendet werden und das bezüglich der durch die Laserstrahlung zu bearbeitenden Oberfläche eine konstante Lage und einen konstanten Abstand einhält.

Laserstrahlung mit einer Wellenlänge von unter 3 Mikrometer, inkludiert die die durch die Nd:YAG Laser (fundamentale Wellenlänge 1,06 Mikrometer) und die Er:YAG Laser (fundamentale Wellenlänge 2,94 Mikrometer) erzeugt werden. Beide dieser Laserstrahlformen sind in der Lage, verschiedene Arten von Gewebe zu schneiden, obwohl jede dieser beiden Typen es auf etwas andere Weise tut. Die Unterschiede resultieren teilweise daher, daß Wasser einen sehr geringen Absoprtionskoeffizienten für Laserstrahlung mit einer Wellenlänge von 1,06 Mikrometer und einen relativ großen Absorptionskoeffizienten für Strahlung bei der Wellenlänge von 2,94 Mikrometer aufweist. Es ist im Stand der Technik bekannt, daß passende Laser für dentale Anwendungen die Er:YAG und in geringerem Umfang die Nd:YAG-Laser sind. Der Grund dafür ist, daß die Er:YAG-Strahlung mit einer Hauptabsorptionsbande von Wasser zusammenfällt.

Erbium (Er) ist ein chemisches Element der Selten-Erde-Gruppe, das mit Yttrium auftritt und auch als Quelle für Laserstrahlung verwendet wird. Die Er:YAG-Laser sind gepulste Festkörperlaser mit einer maximalen Emission im mittleren Infrarotbereich bei 2,94 Mikrometer, in dem Wasser stark absorbiert. Laserchirurgie, die mit Er:YAG-Lasern durchgeführt wird, führt dazu, daß Wasser im angestrahlten Gewebe die Strahlungsenergie aufnimmt.

Harte Oberflächen, wie Zähne, werden, obwohl sie nur sehr wenig Wasser enthalten, auch durch Absorption der Laserstrahlung erhitzt. Wenn Laserstrahlung einem Zahn zugeführt wird, wird, um eine Beschädigung der Pulpe, die ein lebendes Gewebe ist, zu vermeiden, der Zahn simultan zur Laserbestrahlung gekühlt. In der Vergangenheit wurde ein Wasserspray, ein Luftspray oder eine Kombination der beiden verwendet, um harte Oberflächen, wie sie Zähne aufweisen, zu kühlen.

In der konventionellen dentalen Chirurgie und in der dentalen Laser-Chirurgie wurde Wasserspray als Kühlmittel für die Oberfläche nach einem Strahlungspuls verwendet. Das US-Patent 4,940,411 von Vassiliadis et al. offenbart einen Dental-Laser, der einen Nd:YAG-Laser verwendet. In diesem Patent wird Wasser nach einem Laserpuls auf den Zahn gesprüht, gefolgt vom Trocknen des Zahns vor der nächsten Aktivierung des pulsierenden Lasers.

Andere Verfahren zur Kühlung wurden durch die Verwendung der kontrollierten Zugabe von Wasser statt des Trocknens der Oberfläche vor und/oder während der Laserbehandlung erreicht, so daß während der Behandlung nur ein dünner Wasserfilm vorhanden ist. Die Wirkung des Aufsprühens von Wasser, um einen dünnen Film zu erzielen, ist darauf gerichtet, eine merkliche Erhöhung der Laserwirksamkeit und eine geringere Beschädigung als mit den früheren Methoden der Laserbehandlung harter Materialien zu erreichen. Es ist jedoch das Aufsprühen von Wasser kontraproduktiv bei harten Oberflächen, da Wasser die Er:YAG-Laserstrahlung deutlich absorbiert, wenn das Wasser auf der Oberfläche eine Dicke von über einigen wenigen Mikrometern aufweist. Bei harten Materialien, beispielsweise Zähnen, die eine ungleichmäßige Oberfläche haben, die deutliche Einbuchtungen aufweist, akkumuliert das Wasser in Taschen, die größer bzw. tiefer als einige wenige Mikrometer sind. Der Effekt solcher Ansammlungen minimiert die Wirksamkeit der Laserstrahlung auf die Oberfläche, die durch die Wassertasche abgedeckt ist, da eben das Wasser die Laserstrahlung absorbiert.

Das Kühlen harter Oberflächen mit Luft ist ebenfalls kontraproduktiv, da die Luft die Bildung von thermischen Gradienten im Zahn begünstigt, was die Ausbildung von Sprüngen im Zahn bewirken kann. Es besteht ein Bedarf für ein Verfahren des Kühlens einer harten Oberfläche, beispielsweise von Zähnen, das eine gleichmäßige Kühlung ungleichmäßiger Oberflächen bewirkt, ohne daß die oben beschriebenen Nachteile auftreten.

Dentale Vorrichtungen werden bekannterweise bei der Durchführung chirurgischer Eingriffe verwendet, beispielweise bei der Wurzelkanalbehandlung, um Zugang zu den infizierten Teilen eines Zahnes zu erhalten. Eine Wurzelkanalbehandlung ist ein chirurgischer Eingriff, der durchgeführt wird, wenn ein Zahn durch eine Verwundung oder einen Abszeß beeinträchtigt ist. Das infizierte Gebiet liegt fast immer nahe der Wurzel des Zahnes und kann innerhalb oder außerhalb der Zahnwurzel liegen. Es ist ein bekanntes Vorgehen, einen Kanal vom Kopf des Zahns in die Wurzel zu bohren, um Zugang zum infizierten Gebiet zu erhalten. Der Inhalt der Wurzel (Nerven und Blutgefäße) wird entfernt (das bedeutet, daß der Zahn abstirbt) und die medikamentöse Behandlung erfolgt durch den Kanal. Nach der Behandlung wird der Kanal mit passendem Material gefüllt.

Es ist auch möglich, eine Wurzelkanalbehandlung so durchzuführen, daß ein Teil des Zahnfleischgewebes ebenso wie ein Teil des Kieferknochens entfernt wird, um Zugang zur Wurzel des infizierten Zahns zu erhalten. Es werden dann Abszesse entfernt, das Knochengewebe wird mit Zahnfleischgewebe bedeckt und der Heilungsprozeß benötigt einige Zeit, abhängig von der Größe des Lochs im Kieferknochen. Es ist schwer, kleine Löcher zu bohren, wenn das vom Bohrer erfaßte Gewebe sowohl hart als auch weich ist. Es besteht ein Bedarf für ein Behandlungssystem, das den Zugang zum infizierten Bereich eines Zahnes durch kleinere Löcher als bisher zur Verfügung stellt. Kleinere Löcher würden die Dauer des Heilungsprozesses, der auf diesen Eingriff folgt, drastisch reduzieren.

Die vorliegende Erfindung betrifft ein Lasersystem zur Verwendung in der Dentalmedizin und umfaßt einen Laser, der aus einer Laserquelle in einem Gehäuse besteht, einen am Gehäuse angebrachten Abstrahlkopf, der Laserstrahlung von der Laserquelle erhält und weiterleitet und ein Fokussiermittel, das am Abstrahlkopf angebracht ist, um den Abstrahlkopf in bestmöglichem Abstand von der durch die Laserstrahlung zu behandelnde Oberfläche zu positionieren. Die Laservorrichtung kann auch ein Fixiersystem umfassen, das am Abstrahlkopf angeordnet ist, um die Laservorrichtung während der Behandlung in ihrer Position zu halten.

Die vorliegende Erfindung umfaßt auch einen Strahlendreher, wobei der Abstrahlkopf der Laservorrichtung den Strahlendreher aufweist, der einen zentralen Spiegel und einen verschieblich adjustierbaren äußeren Spiegel innerhalb eines drehbaren Gehäuses aufweist. Der Strahlendreher ist an einem ersten Ende des Abstrahlkopfes so angeordnet, daß er die von der Laserquelle kommende Laserstrahlung verdreht. Der verschieblich adjustierbare äußere Spiegel wird verwendet, um die Größe des durch den drehenden Laserstrahl zu bohrenden Loches zu vergrößern oder zu verkleinern.

Die erfindungsgemäße Laservorrichtung kann mit einem Kühlsystem versehen sein. Das Kühlsystem wird elektromechanisch durch die Laserquelle des Lasers gesteuert und weist Mittel zur Kühlung der durch die Laserstrahlung getroffenen Oberfläche auf. Das Kühlsystem sprüht zwischen den Pulsen der Laserstrahlung eine nicht-wässerige Lösung auf die zu kühlende Oberfläche.

Der Fokussensor der vorliegenden Erfindung ermöglicht die Positionierung der Laservorrichtung nahe der durch die Laserstrahlung zu bearbeitenden Oberfläche, so daß der Brennpunkt der Laserstrahlung in der gewünschten Lage auf der zu bearbeitenden Oberfläche liegt. Die Blockiervorrichtung für die Laservorrichtung ermöglicht es, die Laservorrichtung vorübergehend in einer solchen Position zu fixieren, daß der Brennpunkt der Laserstrahlung unveränderlich auf dem ausgewählten Gebiet der zu bearbeitenden Oberfläche liegt.

Die vorliegende Erfindung ermöglicht auch das Durchführen chirurgischer Eingriffe auf einer infizierten Oberfläche eines Zahnes unter Verwendung von Laserstrahlen, die von der Laservorrichtung kommen. Die Laservorrichtung wird so positioniert, daß ihr Abstrahlkopf eine solche Lage zum infizierten Zahn einnimmt, daß der Brennpunkt der Laserstrahlung auf das infizierte Gebiet des Zahnes fällt. Die Laserstrahlung, die durch das Zahnfleisch und den Kieferknochen des Patienten geleitet wird, um eine Öffnung im Zahnfleisch und im Kieferknochen zu bilden, erlauben es der Laserstrahlung, auf das infizierte Gebiet des Zahnes zu wirken. Während der Wirkungsdauer der Laserstrahlung wird der Kopf der Laservorrichtung so fixiert, daß der Brennpunkt der Laserstrahlung auf dem infizierten Gebiet des Zahnes durch das Zahnfleisch und den Kieferknochen festbleibt. Nachdem auf diese Weise Zugang zum infizierten Gebiet des Zahnes geschaffen wurde, wird das infizierte Gebiet dräniert und mit Medikamenten behandelt.

Die Erfindung wird im folgenden an Hand der Zeichnung näher erläutert. Dabei ist
die Fig. 1 eine schematische Ansicht einer erfindungsgemäßen Vorrichtung, die eine Oberfläche gleichzeitig mit Laserstrahlung behandelt und mit einem Kühlmittel kühlt,
die Fig. 2 ist ein Längsschnitt, der die wesentlichen Teile der erfindungsgemäßen Laservorrichtung zeigt, die Fig. 2A ist eine Ansicht ähnlich der Fig. 2, wobei die Vorrichtung einen Strahldreher aufweist,
die Fig. 2B ist eine Ansicht ähnlich der Fig. 2A und zeigt eine erfindungsgemäße Variante der Vorrichtung,
die Fig. 3 ist ein Längsschnitt, der die wesentlichen Teile eines erfindungsgemäßen Strahldrehers zeigt,
die Fig. 4 ist ein schematischer Längsschnitt durch das Frontende einer erfindungsgemäßen Vorrichtung, bei der die Spiegelungsverhältnisse an einem Knick in der Vorrichtung deutlich werden,
die Fig. 5 ist eine Seitenansicht, die die wesentlichen Bestandteile des erfindungsgemäßen Fokussensors darstellt,
die Fig. 6 ist eine perspektivische Ansicht von Kopfauflagen zur Verwendung mit einem erfindungsgemäßen Lasersystems,
die Fig. 7 ist ein Längsschnitt durch eine erfindungsgemäße an einem Zahn befestigte Fixiervorrichtung,
die Fig. 8 ist eine perspektivische Ansicht eines erfindungsgemäßen Lasersystems mit Kühlvorrichtung, auf einen Zahn wirkend,
die Fig. 9 ist ein Längsschnitt durch eine erfindungsgemäße an einem Zahn angreifende Fixiervorrichtung, die mit einem durch das Zahnfleisch und den Kieferknochen wirkenden Laser zusammenwirkt und
die Fig. 10 ist ein Blockdiagramm einer erfindungsgemäßen Laservorrichtung, die die elektrischen Verbindungen zeigt.

Gemäß dem Hauptkonzept der Erfindung umfaßt ein dentales Lasersystem eine Laservorrichtung, die es dem Benutzer erlaubt, Laserstrahlen an die gewünschte Stelle innerhalb des Mundes eines Patienten zu richten, ohne optische Fasern zu verwenden. Das Lasersystem umfaßt auch ein Kühlsystem, um die mit der Laserstrahlung der Laserquelle zu behandelnde Oberfläche zu kühlen. Die Laserstrahlung wird durch den Fokussiersensor der Laservorrichtung genau auf die gewünschte Stelle gerichtet und wird durch das Fixiersystem der Vorrichtung korrekt gerichtet gehalten. Da der Laserstrahl auf eine solche Weise fokussiert wird, daß der Brennpunkt des Laserstrahles auf die korrekte Stelle gerichtet ist und da diese Position durch ein Fixiersystem aufrecht erhalten wird, kann der Benutzer chirurgische Eingriffe mit größter Genauigkeit und kleinsten Fehlern durchzuführen. Das Kühlsystem der Laservorrichtung arbeitet simultan zur Laserbestrahlung und erlaubt es dem Benutzer, chirurgische Eingriffe in kürzester Zeit durchzuführen. Simultanes Kühlen reduziert die Notwendigkeit der Abschaltung des Lasers unter Unterbrechung der Laserbehandlung, um das Auskühlen harter Oberflächen, wie beispielsweise der Oberflächen von Zähnen, zu erlauben.

Um die Auswirkungen kleiner, unvermeidlicher Vibrationen minimal zu halten, muß die Laservorrichtung nahe an der mit dem Laserstrahl zu behandelnden Oberfläche angeordnet werden. Die Nähe des Abstrahlkopfes zur zu behandelnden Oberfläche macht es notwendig, daß die Laservorrichtung und Laserquelle kompakt ist. Eine kompakte Laserquelle ist eine, die klein genug ist, um in ein dentales Handstück zu passen oder eine, die so ausgestaltet ist, daß der Abstrahlkopf der Laservorrichtung in eine Halterung nahe dem Gesicht des Patienten gelagert werden kann, ähnlich einer Röntgenröhre für zahnärztliche Zwecke.

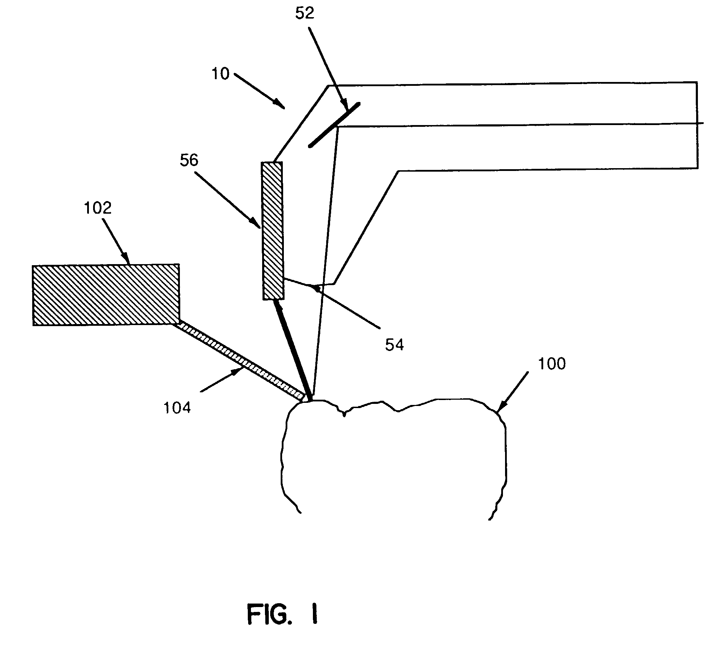

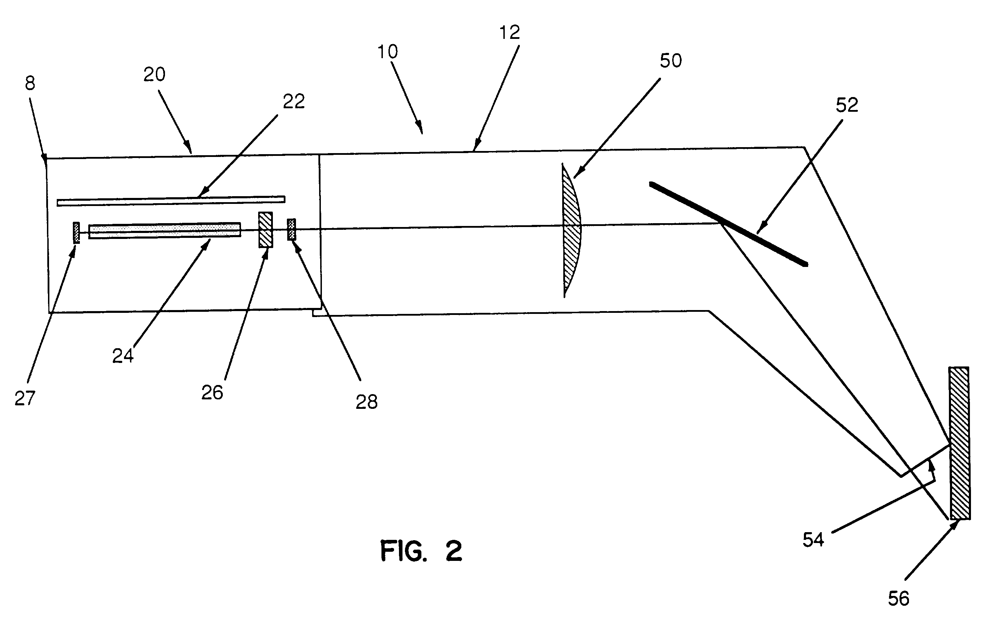

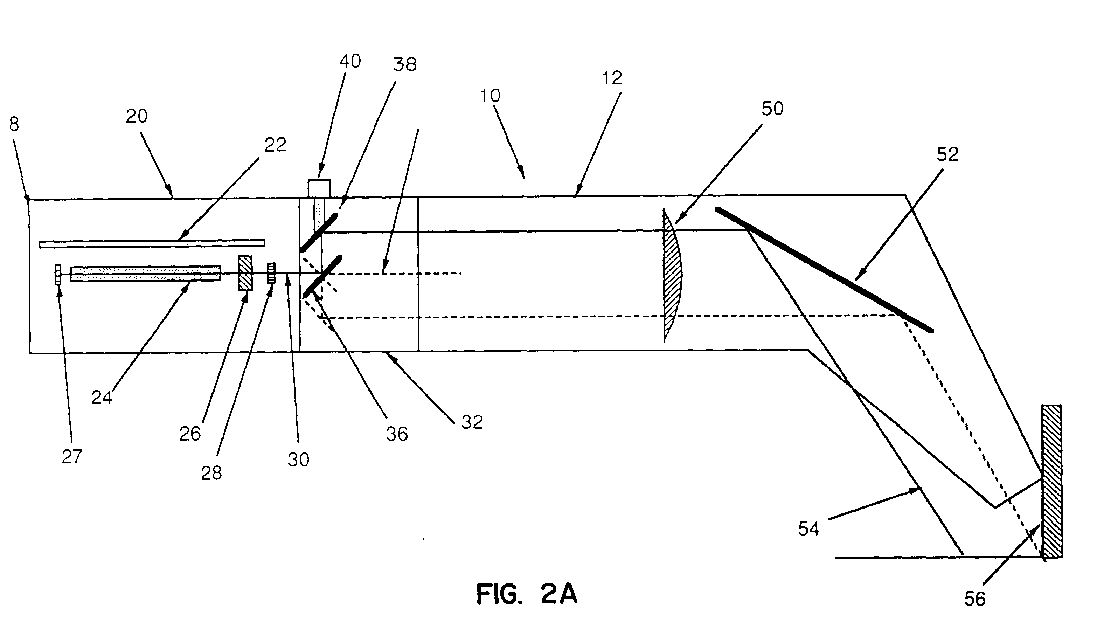

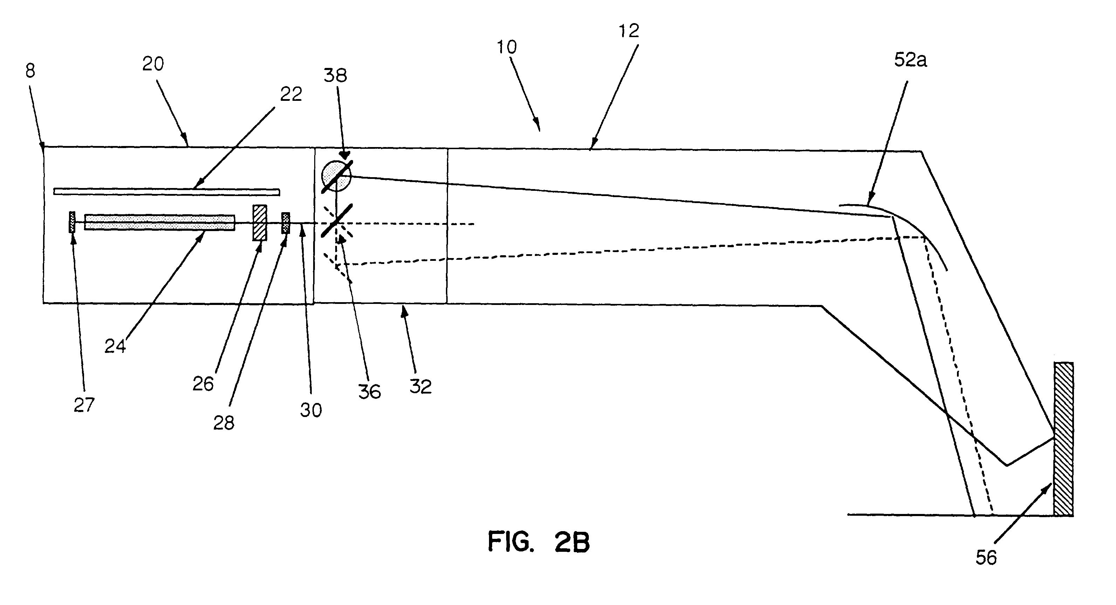

Die Fig. 1 und 2 zeigen eine Ausführungsform einer Laservorrichtung 10 eines dentalen Lasersystems, das erfindungsgemäß ausgebildet ist. Die Laservorrichtung 10 umfaßt ein Handstück 12, das so ausgebildet ist, daß es von einem Benutzer in der Hand gehalten werden kann und umfaßt weiters eine Laserquelle innerhalb eines Gehäuses 20. Am proximalen Ende 8 der Laservorrichtung 10 ist einer oder sind mehrere Verbindungsstücke (nicht dargestellt) zur Verbindung der Laservorrichtung 10 mit einer (nicht dargestellten) elektrischen Kabelverbindung zu einem (nicht dargestellten) Kühlsystem vorgesehen. Bei anderen Ausführungsformen können die Verbindungsteile in der Energieversorgung untergebracht werden.

Die Laserquelle besteht aus einer Blitzlampe 22, einem Laserstab 24, einem Q-Schalter 26 und Laserspiegel 27 und 28. Eine oder mehrere Blitzlampen 22 dienen als Pumpen für die Laserlichtquelle. Die Blitzlampe 22 ist in Längsrichtung parallel zur Zentralachse des Abstrahlkopfes 12 angeordnet und produziert sehr kurze, intensive Lichtblitze, etwa 1 bis 100 Pulse pro Sekunde.

Der Laserstab 24 ist in Längsrichtung entlang der Mittelachse des Abstrahlkopfes 12 und parallel zum Gehäuse 20 angeordnet. Die Laserquelle im Gehäuse 20 weist zumindest zwei Spiegel 27 und 28 auf. Der erste Spiegel 27 des Lasers ist totalreflektierend ausgebildet und der zweite Spiegel 28 der Laserquelle 22 ist teilweise reflektierend ausgebildet. Gegebenenfalls kann ein Q-Schalter vorgesehen sein. der Q-Schalter wird verwendet, um große Strahlenintensitäten der Laserquelle zu erzeugen. Die Strahlungsausbrüche werden erreicht, indem der Strahlengang zum zweiten Spiegel 28 für ein gewisses Zeitintervall, während dessen der Laserstab gepumpt wird, gesperrt ist, wodurch der Stab Energie speichert. Der Q-Schalter stellt dann in sehr kurzer Zeit den Strahlengang zum Spiegel her und ein gigantischer Puls wird so erzeugt.

Der Laserstab 24 kann aus einem der folgenden Materialien bestehen: Er:YAG, Nd:YAG, Ho:YAG, CTE:YAG, ErCr:YSGG. In Fig. 2 und 2a gezeigten Ausführungsformen sind die Laserstäbe Er:YAG. Beim Verwenden eines Er:YAG-Lasers wird es bevorzugt zum Entfernen von Material die Laserstrahlung zu pulsen. Jeder Puls an Laserstrahlung hat eine Energie von 50 Milli-Joules bis 500 Milli-Joules. Die Frequenz der notwendigen Pulse liegt zwischen 5 und 50 Hertz. Die Pulsbreite muß zwischen 0,1 Mikro-Sekunden und 300 Mikro-Sekunden liegen. Alternativ dazu liegt bei Verwendung eines Nd:YAG Lasers die Laserenergie pro Puls zwischen 10 Milli-Joules und 400 Milli-Joules. Die Pulsbreite muß bei Betrieb mit Q-Schalter zwischen 10 und 50 Nano-Sekunden liegen und beim Betrieb ohne Q-Schalter zwischen 1 und 300 Mikro-Sekunden.

Ein Er:YAG-Laserstab wird bei der Laservorrichtung für dentale Anwendungen gemäß Fig. 2, insbesondere deshalb verwendet, weil er Licht im Bereich von etwa 2,94 Mikrometer abstrahlt. Damit liegt die vom Er:YAG-Laser abgegebene Strahlung in einem Hauptabsorptionsband von Wasser. Die Er:YAG Laserstrahlung weist niedrige Energie auf. Es ist auch eine Wellenlänge, die von Materialien, die man im Körper findet, beispielsweise Kohlenwasserstoffen und Wasser, leicht absorbiert wird. Wenn Laserstrahlung auf harte Oberflächen, beispielsweise Zähne trifft, muß die getroffene Oberfläche gekühlt werden. Die in der Laserquelle 20 erzeugte Strahlung gelangt, wenn sie durch den zweiten Spiegel 28 hindurchgelangt, so wie in den Fig. 2A und 2B dargestellt, in den Strahldreher 32 und gelangt in den Abstrahlkopf 12. Die Laserstrahlung tritt in Längsrichtung in den Abstrahlkopf 12 ein und wird durch einen nicht flexiblen Lichtleiter, eine Fokussierlinse 50 gebündelt. Bei anderen Ausführungsformen kann ein Lichthorn oder ein zylindrischer Stab als nicht flexibler Lichtleiter statt der Fokussierlinse 50 verwendet werden.

Nachdem die Laserstrahlung fokussiert wurde, trifft sie auf den Umlenkspiegel 52. Der Umlenkspiegel 52 ist schräg innerhalb des Abstrahlkopfes montiert. Der Umlenkspiegel 52 dient zur Umlenkung der Laserstrahlen in jedem beliebigen Winkel zur Längsrichtung. Der Winkel zwischen der optischen Achse des Abstrahlkopfes 12 und der Normalen auf den Spiegel 52 liegt etwa im Bereich zwischen 30 und 60 Grad. Die Umlenkung des Laserstrahles erlaubt es dem Chirurgen, alle Punkte auf der zu behandelnden Oberfläche zu erreichen.

In den Fig. 2A und 2B sind alternative Ausführungsformen der Laservorrichtung 10 dargestellt. Die Ausführungsform nach Fig. 2B verwendet an Stelle der Brennlinse 50 und des Umlenkspiegels 52 einen konkaven Spiegel 52a als Fokussiervorrichtung, wie dies in den Fig. 2 und 2A dargestellt ist. Der konkave Spiegel 52a erfüllt sowohl die Funktion des Fokussierens als auch des Umlenkens des Laserstrahles um einen gewünschten Winkel.

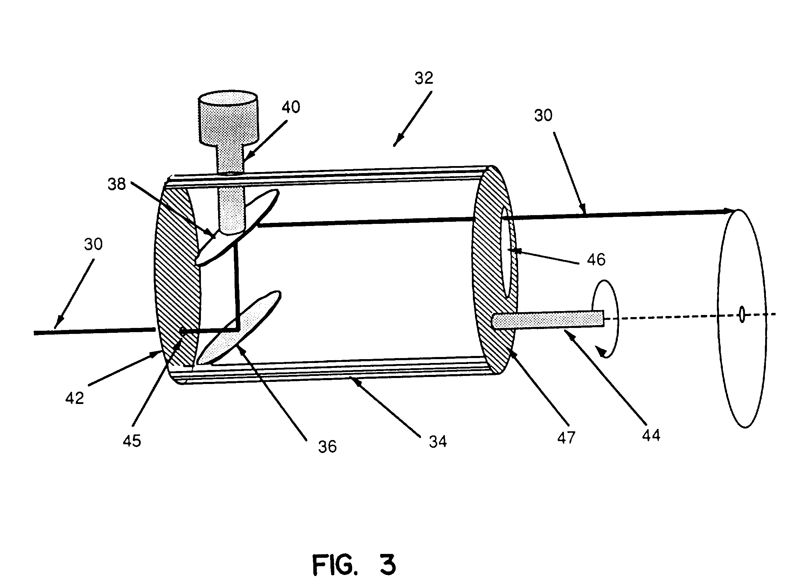

Der Strahldreher 32 ist so, wie in Fig. 2A und 2B gezeigt, zwischen der Laserquelle 20 und dem Abstrahlkopf 12 angeordnet. Wie aus Fig. 3 ersichtlich, umfaßt der Strahldreher eine Adjustiervorrichtung 40, erste und zweite Spiegel 36 und 38 und ein Gehäuse 34. Der Strahldreher 32 ist entlang der Längsachse des Abstrahlkopfes 12 und entlang der Ausbreitungsrichtung des Laserstrahles angeordnet. An einem ersten Ende 42 des Strahldrehers 32 erlaubt es eine Öffnung 45 der Laserstrahlung 30, aus der Laserquelle kommend, einzufallen. Die Öffnung 45 ist in der Achse 44 des Strahldrehers 32 angeordnet, die mit der Achse des Laserstrahles 30 zusammenfällt. Die in den Strahldreher 32 durch die Öffnung 45 einfallende Laserstrahlung wird durch den ersten Spiegel 36 um 90 Grad abgelenkt und dann durch den zweiten Spiegel 38 wiederum um 90 Grad so abgelenkt, daß ihre nunmehrige Fortpflanzungsrichtung parallel zur Achse des Laserstrahles, aber um einen gewünschten Betrag dazu versetzt, verläuft. Der Strahldreher 32 weist eine zweite Öffnung 46 an seinem zweiten Ende 47 auf, die es der Laserstrahlung erlaubt, aus ihm auszutreten. Der Strahldreher 32 weist auch einen (nicht dargestellten) Motor samt zugehörigem passendem (nicht dargestellten) Getriebe auf, durch das der Strahldreher 32 um seine Drehachse in Rotation versetzt wird.

Wenn der Strahldreher 32 um seine Achse gedreht wird, beschreibt die aus dem Strahldreher 32 austretende Laserstrahlung 30, die durch den Abstrahlkopf 12 wandert, einen Kreis oder eine Spirale an der Abstrahlseite des Handstückes 12. Der Kreis oder die Spirale bohrt eine zylindrische Bohrung in die durch die rotierende Laserstrahlung getroffene Oberfläche. Mit Hilfe einer Justiervorrichtung 40 kann der Umfang des Kreises oder der Spirale, die durch die Rotation des Strahldrehers 32 gebildet wird, vergrößert oder verkleinert werden, durch Verdrehung des zweiten Spiegels 38 oder durch Vergrößerung oder Verkleinerung des Abstandes zwischen dem ersten und dem zweiten Spiegel 36 und 38. Die Justiervorrichtung 40 ist ein zylindrischer Stab mit einem Kopf an seinem ersten Ende. Am zweiten Ende der Justiervorrichtung 40 ist der zweite Spiegel 38 angeordnet. Die Normale auf den zweiten Spiegel 38 schließt einen 45 Grad Winkel mit der Achse der Justiervorrichtung 40 ein. Die Justiervorrichtung 40 erstreckt sich durch eine Öffnung im Abstrahlkopf 12 und ist verschieblich oder mittels eines Gewindes mit den Wänden des Abstrahlkopfes 12 verbunden, um die Vergrößerung oder Verkleinerung des Abstandes zwischen dem ersten und dem zweiten Spiegel 36 und 38 zu erlauben.

Mit ordentlich eingestellter Fokussierung ist es möglich, Löcher zu bohren, die bei einem Durchmesser, der nicht größer ist als 200 Mikrometer, jede gewünschte Tiefe aufweisen. Die Möglichkeit, Löcher dieser Größe zu bohren, kann beispielsweise verwendet werden, um sich Zutritt durch Zahnfleisch, zu Abszessen außerhalb oder innerhalb von Zähnen zu verschaffen. Das Loch kann dazu verwendet werden, den Abszeß zu dränieren oder Medikamente zur infizierten Stelle zu injizieren.

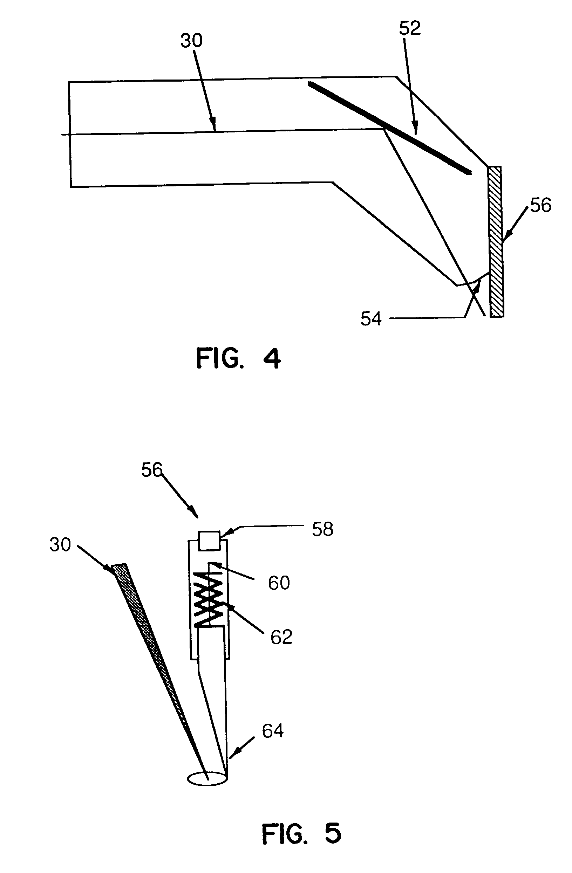

Fig. 4 zeigt das Frontende des Abstrahlkopfes 12 der Laservorrichtung 10 für den dentalen Gebrauch. Das Frontende des Abstrahlkopfes 12 ist das Ende, an dem der Spiegel 52 angeordnet ist. Der Spiegel 52 lenkt die durch den Abstrahlkopf 12 wandernder Strahlung ab und aus der Abstrahlkopfseite 54 aus. Die Richtung, der aus der Seite 54 des Abstrahlkopfes austretenden Strahlung kann durch Bewegung des Spiegels 52 gesteuert werden.

Um während des Betriebes der Laservorrichtung die richtige Fokussierung aufrecht zu erhalten, ist es notwendig, den Abstrahlkopf 12 in einem konstanten Abstand vom Zahn mit einer Toleranz in der Größenordnung von unter 1 Millimeter zu halten. Da die Laserstrahlung auf einen Punkt fokussiert wird, ist es wichtig, sicherzustellen, daß dieser Punkt auf der Oberfläche gehalten wird, die die Laserwirkung benötigt. Die durch den Laserstab 24 erzeugte Strahlung, die in der vorliegenden Erfindung verwendet wird, ist in den meisten Fällen im Bereich des Infrarotes liegend und daher unsichtbar. Daher ist das Fokussieren der Laserstrahlung durch Beobachtung nicht möglich. Fokussieren könnte erfolgen, in dem man eine sichtbare Laserstrahlung dem infraroten Laserstrahl überlagert. Obwohl diese eine übliche Praxis ist, ist sie für die vorliegende Anwendung nicht sehr passend. Dunst und Dampf steigen vom Laserauftreffpunkt auf und machen jede visuelle Beobachtung zweifelhaft. Daher schlägt die Erfindung die Verwendung mechanischer Sensorvorrichtungen vor.

Der Fokussensor 56, der in den Fig. 4 und 5 dargestellt ist, bringt der Laservorrichtung für die dentale Anwendung die Möglichkeit, als eine ansetzbare Vorrichtung zu arbeiten, wobei der Laser dadurch positioniert wird, daß der Teil des Strahlungsfeldes, der für die Entfernung von Zahnmaterial am wirksamsten ist, auf der Oberfläche oder in die Höhlung des Zahnes projeziert wird. Dies wird dadurch erreicht, daß das Handstück auf die zu behandelnde Oberfläche gedrückt wird, bis der Kontakt 58 sich schließt. Der Fokussensor stellt somit für die Laservorrichtung eine Kontrollvorrichtung dar, die die Abstrahlung von Laserstrahlung erst ermöglicht, wenn die Fokussierung erreicht ist.

Wie in Fig. 5 dargestellt, umfaßt der Fokussensor einen Fühler 64, der mit einer Feder 62 und einem Taster 60 verbunden ist und in einem Gehäuse 66 mit einem Kontakt 58, der am geschlossenen Ende des Gehäuses 66 angeordnet ist, versehen ist. Die Feder 62 ist an einem Ende mit den Seitenwänden des Gehäuses verbunden. Wenn daher das Handstück 12 nach unten, gegen die zu behandelnde Oberfläche gepreßt wird, wird die Feder 62 komprimiert und der Stift 60 bewegt sich nach oben, bis er den Kontakt 58 berührt.

Berührt der Stift 60 den Kontakt 58, erhält der Benutzer über ein elektrisches Signal die Mitteilung, daß die richtige Fokussierung erreicht wurde. Das Signal kann ein optisches oder akustisches Signal sein oder auch eine Anzeige an einem Unterbrecher, der verhindert, daß der Laser betätigt wird, solange die richtige Fokussierung noch nicht erreicht ist. Es muß festgestellt werden, daß akzeptables Fokussieren über einen gewissen Bereich der Laserstrahlstärke gegeben sein kann. Dieser Bereich hängt von der Brennweite der fokussierenden Linsen und vom ursprünglichen Strahldurchmesser ab. Es kann daher der in Fig. 5 gezeigte Kontakt 58 ein Schleifkontakt sein, der über den gesamten akzeptablen Fokussierbereich geschlossen bleibt.

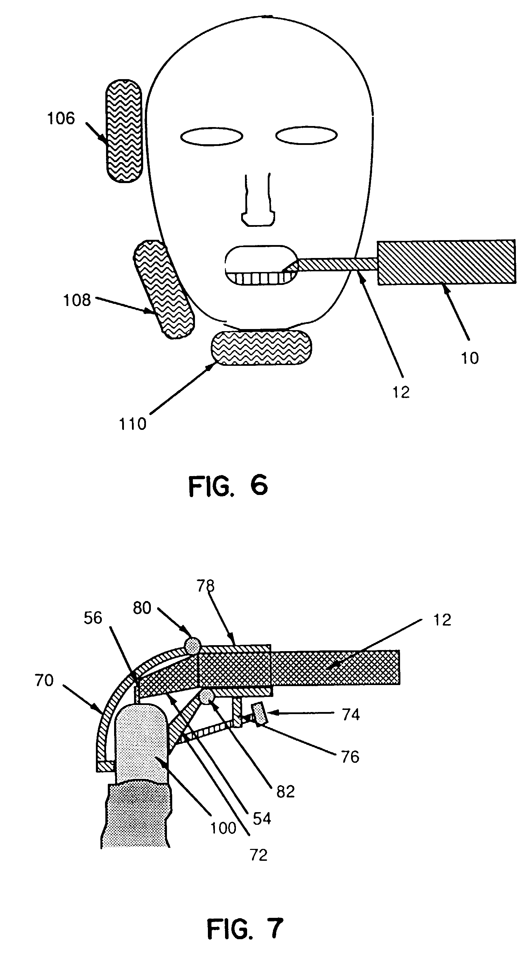

Ein wichtiges Kennzeichen des Mechanismus ist es, die Sicherheit zu liefern, daß der Laser nicht feuern kann, solange das Ziel nicht ordentlich fokussiert ist. Ein solcher Mechanismus ist in Fig. 6 dargestellt. Ein Behandlungsplatz ist mit drei Sensorkissen 106, 108 und 110 versehen, der Patient wird aufgefordert, sein Gesicht gegen diese Kissen zu legen. Der Patient wird nicht physisch an diese Sensorkissen gebunden, sondern lehnt sich nur nach freiem Willen an. Die Sensorkissen enthalten Sensoren, die elektrisch mit der Laservorrichtung 10 verbunden sind. Wenn der Patient sich bewegt, wird die Laserstrahlung automatisch abgeschaltet. Die Sensoren innerhalb der Sensorkissen können auf eine Vielzahl unterschiedlicher externer Größen, wie Druck, Bewegung oder Wärme reagieren. Es ist klar, daß die Sensitivität der Sensorkissen nicht auf diese Größen beschränkt ist. Die Bezeichnung Sensorkissensensibilität soll die Empfindlichkeit für jegliche außerhalb des Kissens stattfindende Veränderung im Hinblick auf die Bewegung des Patienten bezüglich der Sensorkissen umfassen.

Das dentale Laserhandstück umfaßt bevorzugt eine Fixiervorrichtung, die, wie in Fig. 7 dargestellt, am Kopf des Handstückes befestigt ist. Die Fixiervorrichtung hilft dabei die Laserstrahlung auf die gewünschte Weise fokussiert zu halten. Die Fixiervorrichtung umfaßt erste und zweite Klemmarme 70 und 72, die an einer Basis 78 mittels federbelasteter Gelenke 80 und 82 angelenkt sind, wobei die Basis 78 passend am Abstrahlkopf 12 befestigt ist. Die federbelasteten Gelenke 80 und 82 der Klemmarme 70 und 72 geben den Halt am Zahn 100 auf, wenn die Bewegung des Patienten übermäßig wird. Der zweite Klemmarm 72 weist auch eine Fixiervorrichtung 74, 76 auf, die in einem Gewinde so gelagert ist, daß sie den Klemmarm 72 fest an den Zahn 100 klemmen kann. Jeder Klemmarm 70 und 72 weist auch (nicht dargestellte) Positionsköpfe auf, die am Ende eines jeden Klemmarmes vorgesehen sind und durch die die Klemmarme 70 und 72 mit der Oberfläche verbunden werden.

Bevor die Klemmarme 70 und 72 am zu behandelnden Zahn 100 angelegt werden, werden bevorzugt der Zahn 100 und seine beiden Nachbarzähne mit einem schnellhärtenden Kunststoffmaterial bedeckt. Wenn dieses Material aufgebracht wird, soll darauf geachtet werden, daß eine glatte Oberfläche erhalten wird. Der Positionskopf eines jeden Klemmarmes 70 bzw. 72 weist einen (nicht dargestellten) Lokalisierstift auf, der sich ins Kunststoffmaterial einprägt. Wenn daher die Klemmarme 70 bzw. 72 aus irgendeinem Grund entfernt werden, können sie genau in ihre ursprüngliche Position zurückgebracht werden, wenn man die Positionsstifte der Positionsköpfe in die ursprünglich von den Positionierstiften selbst geschaffenen Löcher des rasch härtenden Kunststoffmaterials einsetzt.

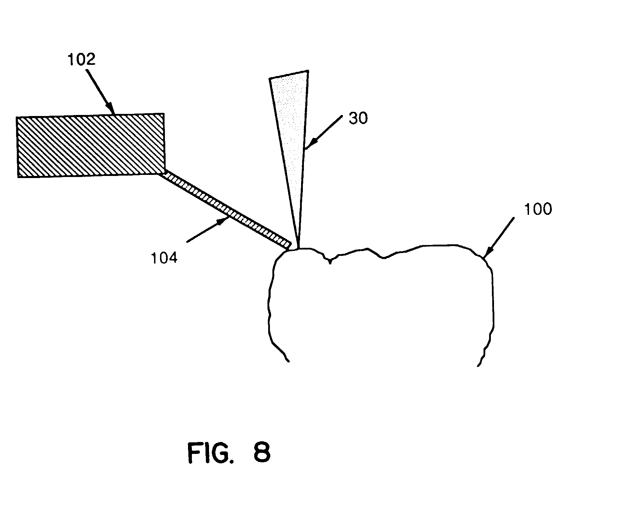

Fig. 8 zeigt die Kühlvorrichtung des Systems, die in Verbindung mit der Laservorrichtung bevorzugt verwendet wird. Die Kühlvorrichtung ist elektrisch mit dem dentalen Laserhandstück 10 verbunden und erlaubt die Aufbringung einer vorbestimmten Menge eines nicht wässerigen Fluids in einem ausgewählten Bereich der Oberfläche, die von Laserstrahlung getroffen wird. Das nicht wässerige Fluid, das in Verbindung mit einem Er:YAG Laserstrahl verwendet werden kann, soll transparent sein, kein Wasser enthalten und einen niedrigen Kochpunkt aufweisen. Lösungen, die verwendet werden können, umfassen Äthylalkohol, Benzylacetat, Furfurylacetat oder ein anderes organisches Lösungsmittel, das für den Patienten harmlos ist. Der niedrige Kochpunkt des nicht wässerigen Fluids ist sehr wichtig, da die latente Wärme (Verdampfungswärme) zur Kühlung des Zahns verwendet werden kann. Die latente Wärme erlaubt es dem Zahn auch, sich selbst als ein Resultat der Fluidverdampfung zu trocknen.

Die Kühlvorrichtung umfaßt einen Pulsator 102, der die Abgabe der nicht wässerigen Lösung steuert. Der Pulsator ist elektrisch mit dem dentalen Laserhandstück so verbunden, daß die Abgabe der Pulse der nicht wässerigen Lösung zwischen den Pulsen der Laserstrahlung erfolgt. Die nicht wässerige Lösung wird mittels eines Kapillarrohres 104 abgegeben, das eine Öffnung aufweist, die nahe der Auftreffstelle der Laserstrahlung angeordnet ist, wie dies aus Fig. 8 ersichtlich ist. Im Falle eines pulsierenden Betriebes des Lasers wird eine gut bemessene Menge der nicht wässerigen Lösung auf die Auftreffstelle zwischen jedem der Pulse aufgebracht. Die von der nicht wässerigen Lösung bedeckte Fläche soll ihrer Größe nach ähnlich der Auftreffstelle der Laserstrahlung sein. Die Laserstrahlung kann die nicht wässerige Lösung mit minimaler Absorption durchdringen. Es wird aber die gesamte Wärme, die sich auf der Zahnoberfläche zufolge der Wechselwirkung zwischen der Laserstrahlung und der Zahnoberfläche bildet, von der nicht wässerigen Lösung aufgenommen, wobei diese verdunstet wird, bevor die Wärme in den Zahn dringen kann.

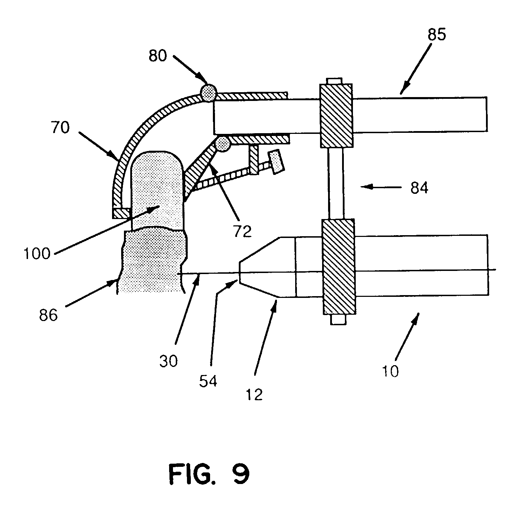

Fig. 9 zeigt ein erfindungsgemäßes dentales Lasersystem, bei dem ein Klemmechanismus verwendet wird, der mit dem Abstrahlkopf 12 über eine Halterung 84 verbunden ist. Sowohl die Laservorrichtung 10 als auch der Abstrahlkopf 12 sind über die Halterung 84 mit dem Fixiermechanismus verbunden.

In Fig. 9 ersetzt ein einfaches zylindrisches Rohr den Abstrahlkopf 12, wie er in Fig. 7 gezeigt ist. In Fig. 9 hält die Halterung 84 die dentale Laservorrichtung 10 und den Abstrahlkopf 12 in einem Bereich, der das Durchdringen von Zahnfleisch möglich macht.

Die Halterung 84 kann in Verbindung mit der Laservorrichtung 10 verwendet werden, um eine neue und verbesserte mikrochirurgische Operation durchzuführen, bei der ein Zugang zur Wurzel eines infizierten Zahns geschaffen wird. Das infizierte Gebiet kann durch die übliche Prozedur erreicht werden, bei der in ein Loch von der Oberseite des Zahnes nach unten in das infizierte Gebiet geschaffen wird. Das infizierte Gebiet kann aber auch durch das Bohren eines Loches von der Seite durch das Zahnfleisch und den Kieferknochen erreicht werden.

Das infizierte Gebiet des Zahnes wird mit Laserstrahlung, die vom Abstrahlkopf 12 der Laservorrichtung 10 stand, bestrahlt. Das Verfahren besteht darin, die Frontseite 54 des Abstrahlkopfes der Laservorrichtung 10 im Bereich des infizierten Gebietes des Zahnes so zu positionieren, daß der Brennpunkt der Laserstrahlung, die von der Laservorrichtung abgestrahlt wird, auf das infizierte Gebiet des Zahnes gerichtet ist. Die dentale Laservorrichtung wird dann so fixiert, daß die Frontseite 54 des Abstrahlkopfes der Laservorrichtung den Brennpunkt der Laserstrahlung dauernd auf den infizierten Bereich des Zahnes gerichtet haltet. Zufolge der Lage des infizierten Gebietes (nahe oder innerhalb der Wurzel des Zahnes) wird die Laserstrahlung durch das Zahnfleisch und den Kieferknochen des Patienten gerichtet und bohrt ein kleines Loch durch diese Materialien bevor sie das infizierte Gebiet des Zahnes erreicht. Nachdem das infizierte Gebiet des Zahnes zugänglich gemacht wurde, wird der Abszeß oder die Wunde durch Absaugung durch die kleine Bohrung drainiert. Das infizierte Gebiet wird dann durch Injektion von Antibiotika in die kleine Bohrung behandelt.

Die optimale Größe des kleinen Loches, das durch das Zahnfleisch und den Kieferknochen durch die Laserstrahlung geschaffen wurde, liegt zwischen 0,2 und 1 Millimeter. Obwohl es auch möglich ist, größere Löcher zu bohren, werden durch das geschilderte Verfahren typischerweise kleine Löcher im Bereich von 0,2 bis 1 Millimeter geschaffen. Löcher die größer sind als 1 Millimeter neigen dazu, zum Verheilen längere Zeit zu gebrauchen.

Die Verwendung von Laserstrahlen um ein Loch durch das Zahnfleisch und den Kieferknochen zu bohren, wird gegenüber der Verwendung mechanischer Bohrer bevorzugt, da verschiedene Gewebe durchbohrt werden müssen, bevor ein Zugang zum infizierten Bereich geschaffen ist. Der Chirurg muß dabei durch weiche Gewebe, ebenso wie durch Knochen bohren. Bei der Verwendung eines mechanischen Bohrers muß man verschiedene Werkzeugeinsätze für die verschiedenen Gewebe verwenden und hat vor allem Schwierigkeiten, ein Loch mit einer geringen Größe, wie beispielsweise 0,2 Millimeter, zu schaffen.

Wie in Fig. 9 gezeigt, wird die Laservorrichtung 10 mittels der Klammern 70, 72 am Kiefer fixiert und so positioniert, daß der Laserstrahl 30 das Zahnfleisch 86 und den (nicht eingezeichneten) Kieferknochen durchdringen kann, um den Abszeß in der Zahnwurzel des Zahnes mit dem Brennpunkt zu bearbeiten. Das Positionieren der Laservorrichtung 10 wird durch die Lage des infizierten Gebietes innerhalb des Zahnes bestimmt. Die Lage des infizierten Gebietes wird dabei zuvor durch eine Röntgenaufnahme bestimmt. Wenn die kleine Bohrung im Zahnfleisch, im Kieferknochen und im Zahn geschaffen ist, wird die dentale Laservorrichtung entfernt und der Inhalt des Abszesses wird durch Aufbringen eines Unterdruckes durch den gebohrten Kanal abgeleitet. Medikamente können durch den Kanal durch Aufbringen eines geringen Überdruckes eingeleitet werden.

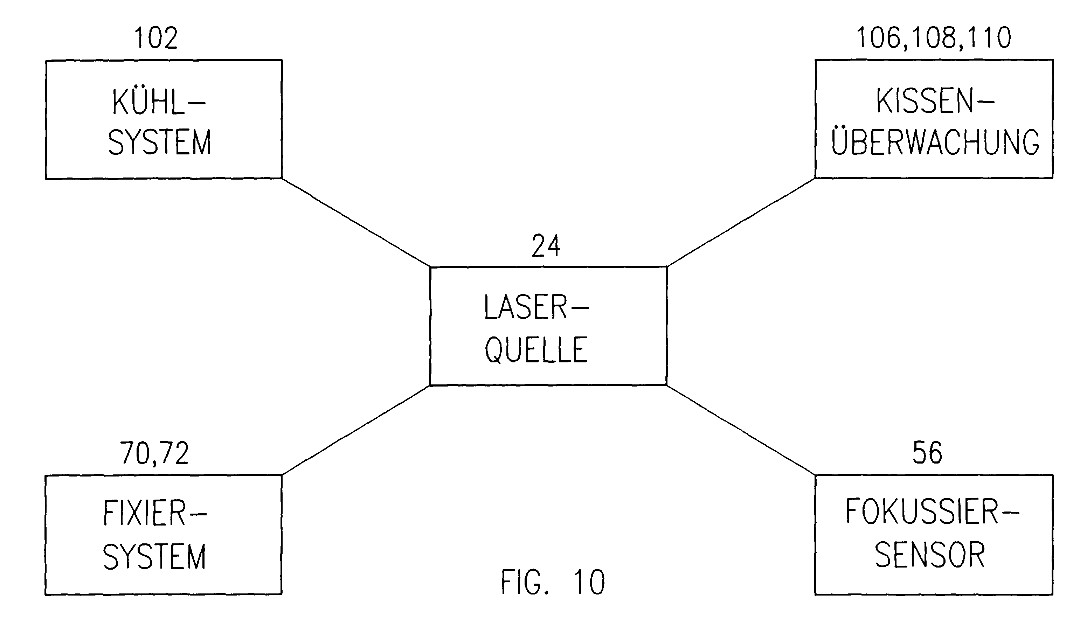

Wie in Fig. 10 gezeigt, weist das gesamte erfindungsgemäße System eine Mehrzahl von Elementen auf, die alle elektrisch miteinander verbunden sind. Die Laserquelle 24 ist elektrisch mit dem Fokussensor 56, dem Fixiersystem 70, 72, dem Kühlsystem 102, den Kissensensoren 106, 108, 110 und in einigen Ausführungsformen mit dem Strahlverdreher 32 verbunden. Der Fokussensor 56 ist elektrisch mit der Laserquelle 24 verbunden, um ein zusätzliches Kontroll- und Steuermittel für die Abgabe der Laserstrahlung zu bilden, daß es nur dann erlaubt, Laserstrahlen auszusenden, wenn der Abstrahlkopf des dentalen Lasergerätes in passender Fokussierentfernung ist. Das Fixiersystem 70, 72 ist mit Laserquelle elektrisch verbunden und wirkt so als Kontrolle bei der Abgabe der Laserstrahlung. Das Fixiersystem 70, 72 wirkt auch als Stabilisator für den Abstrahlkopf und beendet die Abgabe der Laserstrahlung, wenn der Laserkopf einer übermäßigen Bewegung unterworfen wird. Die Kissensensoren 106, 108, 110 wirken auch als Kontrollmechanismen durch ihre Verbindung mit der Laserquelle und beenden die Abgabe von Laserstrahlung, wenn der Patient sich in zu starken Ausmaß bewegt.

Das Kühlsystem 102 ist elektrisch mit der Laserquelle verbunden, da die Laserquelle und das Kühlsystem synchronisiert sein müssen, um die Aufbringung einer vorbestimmten Menge nicht wässeriger Kühlmittellösung zwischen den Pulsen der Laserstrahlung zu erlauben.

Die Erfindung ist nicht auf das dargestellte Ausführungsbeispiel beschränkt, sondern kann verschiedentlich abgewandelt und verändert werden. So ist es insbesondere nicht notwendig, daß alle dargestellten und beschriebenen Elemente vorhanden sind und es können auch die Größen, der Aufbau und das Zusammenspiel der einzelnen Teile im Rahmen der beigefügten Patentansprüche geändert werden, ohne daß der Rahmen der Erfindung verlassen wird.

## Patentansprüche

1. Eine dentale Laservorrichtung (10) um Laserstrahlung auf eine Oberfläche einwirken zu lassen, umfassend: ein Gehäuse (20), eine Laserquelle, um im Gehäuse Laserstrahlung zu erzeugen, einen Abstrahlkopf (12), der zwei Enden aufweist, wobei das erste Ende mit dem Gehäuse (20) verbunden ist, um die Laserstrahlung der Laserquelle aufzunehmen und mit einem Fokussensor (56), der am zweiten Ende des Abstrahlkopfes angeordnet ist, um den Abstrahlkopf (12) in einer optimalen Entfernung von der von der Laserstrahlung zu beaufschlagenden Oberfläche zu positionieren.

2. Dentale Laservorrichtung nach Anspruch 1, dadurch gekennzeichnet, daß der Fokussensor (56) ein elektrisches Signal abgibt, wenn der Abstrahlkopf (12) in der genannten optimalen Entfernung positioniert ist und dadurch, daß das elektrische Signal die Aktivierung der Laserquelle steuert.

3. Dentale Laservorrichtung nach Anspruch 1, dadurch gekennzeichnet, daß dem genannten zweiten Ende des Abstrahlkopfes (12) ein Befestigungssystem (70, 72) zugeordnet ist, um den Abstrahlkopf (12) während des Betriebes lösbar am Ziel zu fixieren.

4. Dentale Laservorrichtung nach Anspruch 3, dadurch gekennzeichnet, daß das Fixiersystem (70, 72) elektrisch mit der Laserquelle gekoppelt ist und beim Lösen des Befestigungssystems die Laserquelle automatisch abschaltet.

5. Dentale Laservorrichtung nach Anspruch 1, dadurch gekennzeichnet, daß ein Kühlsystem (102) elektrisch mit der Laserquelle gekuppelt ist, um die von der Laserstrahlung beaufschlagte Oberfläche zu kühlen, indem sie pulsierend vorbestimmte Mengen einer nicht wässerigen Lösung dieser Oberfläche zuführt.

6. Dentale Laservorrichtung nach Anspruch 5, dadurch gekennzeichnet, daß die nicht wässerige Lösung einen niederen Kochpunkt aufweist.

7. Dentale Laservorrichtung nach Anspruch 1, dadurch gekennzeichnet, daß die Laserquelle zumindest einen Laserstab und zumindest eine Blitzlampe aufweist, daß der Laserstab der Länge nach im Zentrum des Gehäuses angeordnet ist und daß die Blitzlampe parallel zu diesem Laserstab angeordnet ist.

8. Dentale Laservorrichtung nach Anspruch 1, dadurch gekennzeichnet, daß der Abstrahlkopf (12) einen direkten Lichtpfad zum Ziel liefert.

9. Dentale Laservorrichtung nach Anspruch 1, dadurch gekennzeichnet, daß der Abstrahlkopf (12) eine Lichtführung mit einem direkten Lichtpfad zum Ziel aufweist.

10. Dentale Laservorrichtung nach Anspruch 9, dadurch gekennzeichnet, daß die Lichtführung eine Sammellinse ist.

11. Dentale Laservorrichtung nach Anspruch 9, dadurch gekennzeichnet, daß die Lichtführung ein Lichthorn ist.

12. Dentale Laservorrichtung nach Anspruch 9, dadurch gekennzeichnet, daß die Lichtführung ein zylindrischer Stab ist.

13. Dentale Laservorrichtung nach Anspruch 1, dadurch gekennzeichnet, daß der Abstrahlkopf (12) einen Strahlendreher am ersten Ende des Abstrahlkopfes aufweist, der einen Zentralspiegel und einen rotierenden und verschieblich justierbaren äußeren Spiegel innerhalb eines rotierenden Gehäuses umfaßt.

14. Dentale Laservorrichtung nach Anspruch 1, dadurch gekennzeichnet, daß ein Umlenkspiegel im Abstrahlkopf (12) vorgesehen ist, der schwenkbar befestigt ist, um eine Justierung in einem Winkelbereich zu ermöglichen.

15. Dentale Laservorrichtung nach Anspruch 1, dadurch gekennzeichnet, daß ein konkaver Umlenkspiegel im Abstrahlkopf (12) vorgesehen ist.

16. Dentale Laservorrichtung nach Anspruch 1, dadurch gekennzeichnet, daß eine Abschaltvorrichtung zumindest ein Kopfkissen aufweist, das einen Sensor enthält, der elektrisch mit der Laserquelle verbunden ist und diese automatisch abschaltet, wenn kein ausreichender Druck auf den Sensor des Kopfkissens wirkt.

17. Dentale Laservorrichtung, um Laserstrahlung auf eine Oberfläche zu richten, umfassend ein Gehäuse (20), einer Laserquelle um innerhalb des Gehäuses Laserstrahlung zu bilden, einen Abstrahlkopf (12) mit einem ersten Ende und einem zweiten Ende, wobei das erste Ende am Gehäuse befestigt ist, um die aus der Laserquelle stammende Strahlung zu empfangen; ein Befestigungssystem (70, 72), das am zweiten Ende des Abstrahlkopfes (12) angeordnet ist, um den Abstrahlkopf während der Behandlung abnehmbar zu fixieren und ein Sicherheitsabschaltsystem, das zumindest ein Kopfkissen aufweist, in dem sich ein Sensor befindet, der elektrisch mit der Laserquelle verbunden ist und diese automatisch abschaltet, wenn ungenügende Kraft auf das Kopfkissen wirkt.

18. Eine Positionierungsklemme, die mit einer dentalen Vorrichtung verwendet wird, umfassend: einen Basisteil (78); einen ersten Klemmarm (70) mit einem ersten Ende, mit einem zweiten Ende und einem ersten federbelasteten Gelenk (80), mit dem der erste Klemmarm mit seinem ersten Ende am Basisteil befestigt ist, wobei der erste Klemmarm an seinem zweiten Ende einen ersten Positionierungskopf aufweist und mit einem zweiten Klemmarm (72), der wie der erste ausgebildet ist.

19. Ein Fokussensor zur Verwendung mit einer dentalen Laservorrichtung umfassend:
ein Gehäuse mit einem ersten und einem zweiten Ende, wobei sich am ersten Ende eine Öffnung befindet, und das Gehäuse eine Innenwand definiert;
einen Fühler (64) mit einem ersten und einem zweiten Ende, wobei das zweite Ende des Fühlers sich durch die Öffnung am ersten Ende des Gehäuses erstreckt;
einen Stift (60), der am zweiten Ende des Fühlers angeordnet ist;
eine Feder (62) mit einem ersten Ende und einem zweiten Ende, wobei das erste Ende mit dem zweiten Ende des Fühlers verbunden ist und das zweite Ende der Feder mit der Innenwand des Gehäuses verbunden ist;
einen Schalter (58), der am zweiten Ende des Gehäuses vorgesehen ist und elektrisch mit der dentalen Laservorrichtung verbunden ist.

20. Fokussensor nach Anspruch 19, dadurch gekennzeichnet, daß der Schalter ein Schiebeschalter ist, der die Verbindung über einen Bereich aufrecht erhält.

21. Verfahren, um einen ausgewählten Bereich einer Oberfläche mit Laserstrahlung von einer Dentalvorrichtung zu bestrahlen, umfassend die folgenden Schritte:
Positionieren der dentalen Laservorrichtung nahe der Oberfläche, so daß der Brennpunkt der Laserstrahlung auf das ausgewählte Gebiet der Oberfläche gerichtet ist;
lösbares Befestigen der dentalen Laservorrichtung in der genannten Lage, so daß der Brennpunkt der Laserstrahlung auf das ausgewählte Gebiet der Oberfläche gerichtet bleibt und
Bestrahlen des ausgewählten Gebietes der Oberfläche mit Pulsen von Laserstrahlung.

22. Verfahren nach Anspruch 21, dadurch gekennzeichnet, daß pulsierend vorbestimmte Mengen einer nicht wässerigen Flüssigkeit mit niedrigem Kochpunkt auf den ausgewählten Bereich aufgebracht werden, wobei jeder Puls der nicht wässerigen Lösung synchron zwischen den Pulsen der Laserbestrahlung aufgebracht wird.

23. Verfahren nach Anspruch 21, dadurch gekennzeichnet, daß die Laserstrahlung, die auf das ausgewählte Gebiet aufgebracht wird, von einem Strahlverdreher verdreht werden kann, wobei das Verfahren weiters den Schritt umfaßt, den Strahlverdreher zu aktivieren, um dadurch den Strahl zu drehen, wodurch die Laserstrahlung bewirkt, daß ein Loch in das ausgewählte Gebiet gebohrt wird.

24. Verfahren nach Anspruch 21, dadurch gekennzeichnet, daß das Aufliegen des Kopfes des Patienten auf einer Kopfauflage überwacht und kontrolliert wird, bevor das ausgewählte Gebiet der Oberfläche mit Laserstrahlung bestrahlt wird.

25. Verfahren nach Anspruch 21, dadurch gekennzeichnet, daß die Lage der Oberfläche so überwacht wird, daß die Pulse der Laserstrahlung nur aufgebracht werden, wenn sich die dentale Laservorrichtung in einem vorbestimmten Abstand von der Oberfläche befindet.

26. Verfahren nach Anspruch 21, dadurch gekennzeichnet, daß es die folgenden zusätzlichen Schritte umfaßt:
Drainieren des ausgewählten Gebietes der Oberfläche, das mit Laserstrahlung bestrahlt wird, wenn der ausgewählte Bereich der Oberfläche infiziert ist und
Behandlung des drainierten ausgewählten Gebietes der Oberfläche durch Aufbringen eines Medikamentes.

27. Verfahren zur Durchführung eines chirurgischen Eingriffes an einem infizierten Gebiet eines Zahnes, bei dem das infizierte Gebiet des Zahnes mit Laserstrahlung behandelt wird, die von einer dentalen Laservorrichtung abgegeben wird, umfassend die folgenden Schritte:
Positionieren des Kopfes der dentalen Laservorrichtung in Nachbarschaft zum infizierten Zahn auf eine solche Weise, daß der Brennpunkt der Laserstrahlung auf dem infizierten Bereich des Zahnes liegt, die Laserstrahlung wird durch das Zahnfleisch und den Kieferknochen des Patienten geleitet, bevor sie den infizierten Bereich des Zahnes triff;
Stabilisieren des Kopfes der dentalen Laservorrichtung auf eine solche Weise, daß der Brennpunkt der Laserstrahlung auf den infizierten Bereich des Zahnes gerichtet bleibt;
Aufbringen der Laserstrahlung auf das Zahnfleisch und den Kieferknochen im Bereich des infizierten Bereiches des Zahnes und Öffnen des Zahnfleisches und des Kieferknochens, um es der Laserstrahlung zu erlauben, auf den infizierten Bereich des Zahnes zu treffen;
Drainieren des infizierten Bereiches des Zahnes und Behandlung des infizierten Bereiches des Zahnes durch Aufbringen von Medikamenten auf den infizierten Bereich.
